# EUROPÄISCHE PATENTANMELDUNG

(11) **EP 2 528 282 A1**
(43) Veröffentlichungstag der Anmeldung: **28.11.2012**
(21) Anmeldenummer: 11167487.5
(22) Anmeldetag: 25.05.2011
(51) Int. Cl.: H04L 12/40, H04L 12/46, H04L 12/42, H04L 12/56

(54) **Kommunikationsnetzwerk und Kopplungseinrichtung zur redundanten Kopplung eines ersten und eines zweiten Teilnetzes des Kommunikationsnetzwerks**

(71) Anmelder: Siemens Aktiengesellschaft, 80333 München (DE)
(72) Erfinder: Köbinger, Franz, 90475 Nürnberg (DE)

(57) **Zusammenfassung**

Die Erfindung beschreibt ein Kommunikationsnetzwerk, welches ein erstes Teilnetz (10), in dem eine erste Anzahl an Kopplungselementen (11, 12, 13, 14, 15, 16, 17) über jeweilige Koppelanschlüsse (P) physikalisch miteinander verbunden ist, umfasst. Erfindungsgemäß ist die erste Anzahl an Kopplungselementen (11, ..., 17) dazu ausgebildet, an einem Redundanzverfahren zur Übertragung von Daten teilzunehmen. Ferner ist ein zweites Teilnetz (20) vorgesehen, in dem eine zweite Anzahl an Kopplungselementen (21, 22, 23, 24, 25, 26, 27) über jeweilige Koppelanschlüsse (P) physikalisch miteinander verbunden sind, wobei die zweite Anzahl an Kopplungselementen (21, ..., 27) dazu ausgebildet ist, an einem Redundanzverfahren zur Übertragung von Daten teilzunehmen. Das erfindungsgemäße Kommunikationsnetz umfasst ein oder mehrere Kopplungseinrichtungen (31, 32) zur Kopplung des ersten und des zweiten Teilnetzes (10, 20), wobei die Kopplungseinrichtungen (31, 32) sowohl Kopplungselemente des ersten Teilnetzes (10) als auch Kopplungselemente des zweiten Teilnetzes (20) sind.

## Beschreibung

Die Erfindung betrifft ein Kommunikationsnetzwerk mit einem ersten und einem zweiten Teilnetz. In dem ersten Teilnetz ist eine erste Anzahl an Kopplungselementen über jeweilige Koppelanschlüsse physikalisch miteinander verbunden. Die erste Anzahl an Kopplungselementen ist dazu ausgebildet, an einem Redundanzverfahren zur Übertragung von Daten teilzunehmen. Analog hierzu ist in dem zweiten Teilnetz eine zweite Anzahl an Kopplungselementen über jeweilige Koppelanschlüsse physikalisch miteinander verbunden, wobei die zweite Anzahl an Kopplungselementen dazu ausgebildet ist, an einem Redundanzverfahren zur Übertragung von Daten teilzunehmen.

Um in Kommunikationsnetzwerken eine hohe Verfügbarkeit sicherstellen zu können, werden diese redundant ausgelegt. In auf Ethernet basierenden Kommunikationsnetzwerken werden Kopplungselemente (sog. switches) hierzu in geeigneter Topologie physikalisch miteinander verbunden. Als Protokoll für eine Datenkommunikation können das Media Redundancy Protocol (MRP) oder das Rapid Spanning Tree Protocol (RSTP) eingesetzt werden. MRP und RSTP erlauben die Kompensation des Ausfalls eines Kopplungselementes oder einer unterbrochenen Leitung zwischen zwei Kopplungselementen. Dem Redundanzverfahren liegt das Prinzip zugrunde, dass beim Ausfall oder der Unterbrechung eines eingerichteten Kommunikationspfads die Kommunikation über einen alternativen Kommunikationspfad, der als Redundanzpfad bezeichnet wird, fortgesetzt wird.

Bei Kommunikationsnetzwerken zur Steuerung von hochverfügbaren Industrie- oder Automatisierungsanlagen besteht das Erfordernis, auch mehrere, jeweils für sich redundante Teilnetze des Kommunikationsnetzwerks miteinander und insbesondere auch redundant miteinander zu verbinden. In der Regel sind die Teilnetze zur Bereitstellung einer Redundanz in Ringtopologie ausgebildet, wobei jedes Ringpaar durch zwei Leitungen miteinander verbunden ist. Die Kopplung der Teilnetze erfolgt mittels einer sog. Stand-by-Kopplung. Dabei ist logisch eine der beiden Leitungen aktiv, während die andere der beiden Leitungen zu Redundanzzwecken vorgesehen ist. Die zweite Leitung wird logisch nur dann geschaltet, wenn bei der ersten Leitung Probleme auftreten. Diese Stand-by-Kopplung kann bislang jedoch nicht in die in jedem Teilnetz vorgesehenen Redundanzmechanismen eingebunden werden.

Es ist Aufgabe der vorliegenden Erfindung, ein Kommunikationsnetzwerk und eine Kopplungseinrichtung anzugeben, welche eine, insbesondere redundante, Kopplung mehrerer für sich redundant ausgelegter Teilnetze ermöglicht, um die Flexibilität der Kommunikation sowie die Verfügbarkeit des Kommunikationsnetzwerks zu verbessern.

Diese Aufgaben werden gelöst durch ein Kommunikationsnetzwerk gemäß den Merkmalen des Patentanspruches 1 und eine Kopplungseinrichtung gemäß den Merkmalen des Patentanspruches 12. Vorteilhafte Ausgestaltungen ergeben sich aus den abhängigen Patentansprüchen.

Die Erfindung schafft ein Kommunikationsnetzwerk mit einem ersten Teilnetz und einem zweiten Teilnetz. In dem ersten Teilnetz ist eine erste Anzahl an Kopplungselementen über jeweilige Koppelanschlüsse physikalisch miteinander verbunden. Die erste Anzahl an Kopplungselementen ist dazu ausgebildet, an einem Redundanzverfahren zur Übertragung von Daten teilzunehmen. In dem zweiten Teilnetz ist korrespondierend hierzu eine zweite Anzahl an Kopplungselementen über jeweilige Koppelanschlüsse physikalisch miteinander verbunden. Auch die zweite Anzahl an Kopplungselementen ist dazu ausgebildet, an einem Redundanzverfahren zur Übertragung von Daten teilzunehmen. Die physikalische Verbindung der Kopplungselemente des ersten bzw. des zweiten Teilnetzes erfolgt bevorzugt in Ring-Topologie, sodass als Redundanzverfahren die aus dem Stand der Technik bekannten MRP- oder RSTP-Mechanismen eingesetzt werden können.

Erfindungsgemäß umfasst das Kommunikationsnetzwerk weiter eine oder mehrere Kopplungseinrichtungen zur Kopplung des ersten und des zweiten Teilnetzes, wobei die Kopplungseinrichtungen sowohl Kopplungselemente des ersten Teilnetzes als auch Kopplungselemente des zweiten Teilnetzes sind oder umfassen.

Der Erfindung liegt die grundsätzliche Idee zugrunde, dass jede der Kopplungseinrichtungen gleichzeitig sowohl Teilnehmer des ersten als auch Teilnehmer des zweiten Teilnetzes ist. Folglich sind die Kopplungseinrichtungen dazu eingerichtet, an dem Redundanzverfahren des jeweiligen Teilnetzes teilzunehmen. Gleichzeitig sorgt eine jeweilige Kopplungseinrichtung für die datentechnische Verbindung der beiden Teilnetze, wobei im Falle mehrerer Kopplungseinrichtungen weiterhin auf die Mechanismen der Redundanzverfahren zurückgegriffen werden kann. Die Kopplungseinrichtungen stellen somit redundanzfähige Router dar, die ein Kommunikationselement beider Teilnetze sind.

Beim Vorsehen zumindest zweier Kopplungseinrichtungen sind die Mechanismen der Redundanzverfahren auf alle Kommunikationsverbindungen eines aus mehreren Teilnetzen bestehenden Kommunikationsnetzwerks einsetzbar. Insbesondere ist eine Redundanz in der Kommunikation zwischen den beiden Teilnetzen gegeben. Ein solches Kommunikationsnetzwerk kann vorteilhaft in hochverfügbaren Industrie- oder Automatisierungsanlagen eingesetzt werden. Wird lediglich eine erfindungsgemäße Kopplungseinrichtung eingesetzt, so stellt diese ein jeweiliges Kommunikationselement beider Teilnetze dar und ermöglicht die Kommunikation zwischen den beiden Teilnetzen.

In einer bevorzugten Ausgestaltung weist jede der Kopplungseinrichtungen zumindest vier Koppelanschlüsse auf, wobei eine jeweilige Kopplungseinrichtung mit zwei ersten Koppelanschlüssen an das erste Teilnetz und mit zwei zweiten Koppelanschlüssen an das zweite Teilnetz angeschlossen ist. Der Anschluss an das jeweilige Teilnetz erfolgt damit in der für Kopplungselemente üblichen Weise.

Es ist weiterhin vorgesehen, dass die Kopplungseinrichtungen dazu ausgebildet sind, an einem Redundanzverfahren zur Übertragung von Daten innerhalb des ersten oder des zweiten Teilnetzes teilzunehmen. Es ist ferner vorgesehen, dass die Kopplungseinrichtungen dazu ausgebildet sind, an einem Redundanzverfahren zur Übertragung von Daten zwischen dem ersten oder dem zweiten Teilnetz teilzunehmen.

Es ist weiterhin zweckmäßig, wenn die Kopplungseinrichtungen dazu ausgebildet sind, zwischen dem ersten und dem zweiten Teilnetz auszutauschende Daten zu übertragen. Die Datenübertragung (das Routing) kann bspw. auf der IP (Internet Protocol)-Ebene, d.h. der Vermittlungsschicht und/oder auch auf der Kommunikationsschicht 3 und/oder einer höheren Schicht des Kommunikationsnetzwerks erfolgen (dabei können die genannten Schichten des Kommunikationsnetzwerks beispielsweise gemäß entsprechenden Schichten des OSI-Schichtmodells ausgebildet und eingerichtet sein).

Gemäß einer weiteren zweckmäßigen Ausgestaltung umfassen die Kopplungseinrichtungen Mittel zur Kontrolle einer Datenverbindung zwischen dem ersten und dem zweiten Teilnetz. Die Mittel zur Kontrolle einer Datenverbindung können bspw. eine Firewall umfassen, welche wahlweise in Hardware oder Software realisiert sein kann. Ein solche Firewall basiert typischerweise auf dem Prinzip der Paketfilterung und ermöglicht es, den Datenverkehr zwischen den Teilnetzen zu kontrollieren und zu filtern.

Bevorzugt umfassen die Mittel zur Kontrolle der Datenverbindung eine zustandsabhängige Firewall. Diese ist auch als Stateful Inspection Firewall bekannt. Durch eine solche Firewall können - im Gegensatz zu einer einfachen Paketfilter-Firewall - die Zustände der Kommunikation zwischen den Teilnetzen berücksichtigt werden, so dass im Ergebnis weniger potenziell gefährliche Kommunikation erlaubt werden muss. Wenn beispielsweise ein DHCP-Telegramm an der zustandsabhängigen Firewall eingeht, wird durch die Firewall erkannt, ob das Telegramm eine Antwort auf eine Anfrage eines Gerätes aus dem geschützten Netz an einen DHCP Server ist oder nicht. Falls ja, darf das Telegramm passieren, ansonsten wird es geblockt.

Gemäß einer weiteren zweckmäßigen Ausgestaltung wird in einem bestimmungsgemäßen Betrieb des Kommunikationsnetzwerks bezüglich der Datenverbindung zwischen dem ersten und dem zweiten Teilnetz eine der Kopplungseinrichtungen aktiv betrieben, während die andere der Kopplungseinrichtungen die Aktivitäten der einen Kopplungseinrichtung überwacht und bezüglich der Datenverbindung passiv im Stand-by betrieben wird. Hierdurch ist sichergestellt, dass lediglich eine einzige Datenverbindung zwischen den Teilnetzen existiert, wie dies z.B. gemäß dem Datennetzstandard Ethernet gefordert ist.

Insbesondere ist vorgesehen, dass die passende Kopplungseinrichtung dazu ausgebildet ist, den Status der Datenverbindung und/oder die Zustände des Mittels zur Kontrolle der Datenverbindung zu überwachen. Es ist weiter zweckmäßig, wenn die passive Kopplungseinrichtung dazu ausgebildet ist, den Ausfall der Datenverbindung zwischen dem ersten und dem zweiten Teilnetz zu detektieren und eine neue Datenverbindung zwischen dem ersten und dem zweiten Teilnetz unter Verarbeitung des letzten Status der ausgefallenen Datenverbindung und/oder der Zustände des Mittels zur Kontrolle der Datenverbindung einzurichten. Hierdurch ist ein Automatismus bereitgestellt, durch den der Ausfall einer die Teilnetze verbindenden Datenverbindung detektiert werden kann. Durch die sofortige Umschaltung unter Übernahme sämtlicher Statusinformationen können die Teilnetze verzögerungsfrei weiterhin miteinander kommunizieren.

Um die Überwachung der Aktivität der aktiven Kopplungseinrichtung durch die passive Kopplungseinrichtung sicherstellen zu können, ist in einer weiteren bevorzugten Ausgestaltung zwischen den Kopplungseinrichtungen eine direkte Datenverbindung zur Aktivitätsüberwachung der aktiven Kopplungseinrichtung durch die passive Kopplungseinrichtung vorgesehen. Im ebenfalls denkbaren Fall einer nicht vorhandenen direkten Datenverbindung kann die Aktivitätsüberwachung über die jeweiligen Kommunikationspfade wahlweise des ersten und/oder zweiten Teilnetzes erfolgen.

Die Erfindung schafft weiterhin eine Kopplungseinrichtung zur redundanten Kopplung eines ersten und eines zweiten Teilnetzes eines Kommunikationsnetzwerks, welches im Betrieb des Kommunikationsnetzwerks sowohl ein Kopplungselement des ersten Teilnetzes als auch ein Kopplungselement des zweiten Teilnetzes ausbildet und dazu ausgebildet ist, an einem jeweiligen Redundanzverfahren zur Übertragung von Daten innerhalb eines der Teilnetze oder zwischen den Teilnetzen teilzunehmen.

Die Erfindung wird nachfolgend näher anhand eines in der Zeichnung dargestellten Ausführungsbeispiels beschrieben.

Die einzige Figur zeigt ein erfindungsgemäßes Kommunikationsnetzwerk 1, das beispielhaft aus einem ersten Teilnetz 10 und einem zweiten Teilnetz 20 besteht. Ein erfindungsgemäßes Kommunikationsnetzwerk kann auch aus einer größeren Anzahl an Teilnetzen bestehen. Jedes der auf dem Datennetzstandard Ethernet basierenden Teilnetze 10, 20 umfasst beispielhaft sieben Kopplungselemente 11, 12, 13, 14, 15, 16, 17 bzw. 21, 22, 23, 24, 25, 26, 27, welche über jeweilige Koppelanschlüsse, sog. Ports, innerhalb ihres Teilnetzes 10, 20 in einer Ring-Topologie physikalisch miteinander verbunden sind. Der Einfachheit halber sind Koppelanschlüsse P lediglich für das Kopplungselement 11 des Teilnetzes 10 sowie für das Kopplungselement 21 des Teilnetzes 20 dargestellt. In der Praxis können die Teilnetze 10, 20 mehr oder weniger Kopplungselemente umfassen. Insbesondere ist es auch nicht erforderlich, dass die Teilnetze 10, 20 eine gleiche Anzahl an Kopplungselementen umfassen. Die Kopplungselemente werden auch als Switches bezeichnet.

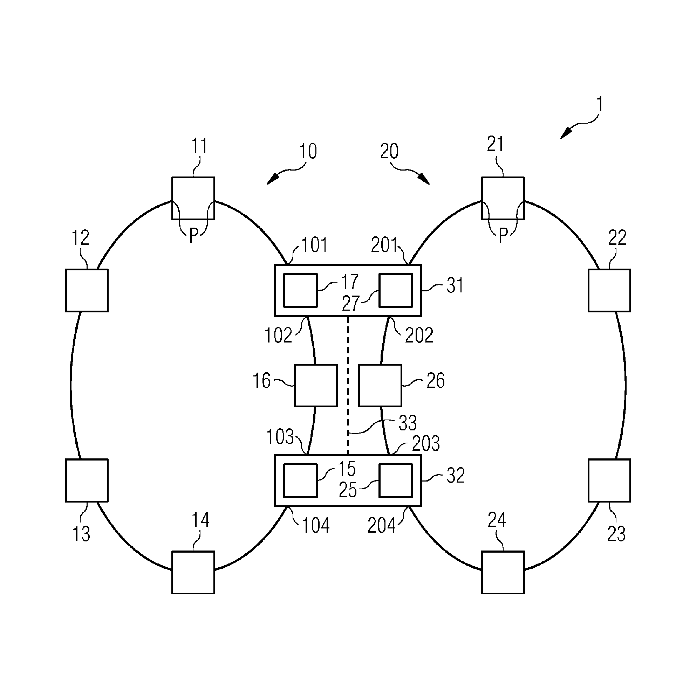

Der Datennetzstandard Ethernet erlaubt nur einen einzigen, eindeutigen Datenpfad zwischen zwei beliebigen Teilnehmern. Werden die Kopplungselemente 11, ..., 17 des ersten Teilnetzes 10 bzw. die Kopplungselemente 21, ..., 27 des zweiten Teilnetzes 20, wie in Fig. 1 dargestellt, über Leitungen über eine Linienstruktur miteinander verbunden und werden weiterhin das erste und das letzte Kopplungselement eines jeweiligen Teilnetzes miteinander verbunden, dann entstehen die gezeigten Ringstrukturen der Teilnetze 10, 20.

Prinzipiell gibt es in einer Ringstruktur zwei Pfade zwischen zwei beliebigen Teilnehmern, die an unterschiedlichen Kopplungselementen angeschlossen sind. Die Teilnehmer sind in bekannter Weise an weiteren, nicht dargestellten Koppelanschlüssen der Kopplungselemente angeschlossen. Die nicht dargestellten Teilnehmer stellen Recheneinheiten, Sensoren oder Aktoren dar. Da in dem Datennetzstandard Ethernet zwei Kommunikationspfade nicht zulässig sind, wird die Verbindung in der Ringstruktur auf der logischen Ebene abgeschaltet. Dies bedeutet, zwar ist die Verkabelung in der Ringstruktur tatsächlich vorhanden; von der Struktur entspricht das jeweilige Teilnetz jedoch einer Linie.

Jedes der Kopplungselemente 11, ..., 17 sowie 21, ..., 27 ist dazu ausgebildet, an einem Redundanzverfahren zur Übertragung von Daten teilzunehmen. Im dargestellten Ausführungsbeispiel wird als Redundanzverfahren das dem Fachmann bekannte Media Redundancy Protocol (MRP) eingesetzt. Das MRP ist ein Protokoll für hochverfügbare Kommunikationsnetzwerke, wie bspw. für kritische Industrie- oder Automatisierungsanwendungen. Das Funktionsprinzip von MRP basiert darauf, Einzelausfälle der Kopplungselemente 11, ..., 17 bzw. 21, ..., 27 oder der Leitung zwischen zwei Kopplungselementen in der jeweiligen Ringstruktur des Teilnetzes 10, 20 zu kompensieren.

Hierzu umfasst wenigstens eines der Kopplungselemente eines jeweiligen Teilnetzes 10, 20 eine Redundanzmanagementeinheit, welche durch spezielle Testpakete die Durchgängigkeit der Ringstruktur überprüft. Hierzu wird zu dem die Redundanzmanagementeinheit enthaltendem Kopplungselement ein Testpaket an das benachbarte Kopplungselement übertragen. Dieses leitet das Testpaket an das nächste, ihm benachbarte Kopplungselement weiter. Schließlich wird das Testpaket wiederum an das die Redundanzmanagementeinheit umfassende Kopplungselement übertragen. Die Redundanzmanagementeinheit leitet selbst keine Pakete weiter und verhindert damit, dass diese endlos in dem Kommunikationsring zirkulieren. Die Durchgängigkeit des Kommunikationsrings wird auch in entgegengesetzter Richtung überprüft.

Fällt eines der Kopplungselemente 11, ..., 17 bzw. 21, ..., 27 eines der Teilnetze 10, 20 aus, so werden die auf einen Koppelanschluss von dem die Redundanzmanagementeinheit enthaltenden Kopplungselement ausgesendeten Testpakete am anderen Koppelanschluss dieses Kopplungselementes nicht mehr empfangen. Als Folge hiervon leitet die Redundanzmanagementeinheit von nun an die Datenpakete in beiden Richtungen weiter und informiert die Kopplungselemente über eine Topologie-Änderung des Kommunikationsringes. In Folge dessen übertragen die Kopplungselemente ihre Datenpakete bzw. Telegramme nicht mehr über den unterbrochenen Pfad, sondern über die Redundanzmanagementeinheit. Damit können dann, trotz Ausfall einer Verbindung, alle Teilnehmer miteinander Daten austauschen.

Um die im MRP verwendeten Redundanzmechanismen auch bei der Kopplung der zwei Teilnetze 10, 20 nutzen zu können, umfasst das Kommunikationsnetzwerk in diesem Ausführungsbeispiel zwei Kopplungseinrichtungen 31, 32. Die Kopplungseinrichtungen 31, 32 stellen dabei sowohl Kopplungselemente des ersten Teilnetzes 10 als auch Kopplungselemente des zweiten Teilnetzes 20 dar bzw. umfassen solche. In der schematischen Darstellung des Ausführungsbeispiels in Fig. 1 umfasst die Kopplungseinrichtung 31 die Kopplungselemente 17, 27. Die Kopplungseinrichtung 32 umfasst die Kopplungselemente 15, 25. Die Kopplungseinrichtungen 31, 32 stellen Router dar, welche jeweils zumindest vier Koppelanschlüsse aufweisen. Das Kopplungselement 31 ist mit den Koppelanschlüssen 101, 102 an das erste Teilnetz 10 angeschlossen. Mit seinen Koppelanschlüssen 201, 202 ist die Kopplungseinrichtung 31 demgegenüber an das zweite Teilnetz 20 angeschlossen. Korrespondierend hierzu ist die Kopplungseinrichtung 32 mit den Koppelanschlüssen 103, 104 an das erste Teilnetz 10, und mit den Koppelanschlüssen 203, 204 an das zweite Teilnetz 20 angeschlossen.

Die Kopplungseinrichtungen 31, 32 unterstützen die Redundanzmechanismen in den jeweiligen Ringstrukturen der Teilnetze 10, 20. Gleichzeitig sind die Kopplungseinrichtungen 31, 32 - wie erwähnt - Teilnehmer, d.h. Kopplungselemente, der Teilnetze 10, 20. Zwischen den beiden Teilnetzen 10, 20 routet eine der Kopplungseinrichtungen 31, 32 auf IP-Ebene, wodurch eine unmittelbare Datenkommunikation zwischen an das erste Teilnetz 10 und das zweie Teilnetz 20 angeschlossenen Teilnehmern erfolgen kann. Die Kopplungseinrichtungen 31, 32 können optional über Sicherheitsfunktionen, wie z.B. eine Firewall, verfügen, sodass der zwischen den Teilnetzen 10, 20 erfolgende Datenstrom nach vorgegebenen Regeln kontrolliert werden kann.

Als Firewall wird vorzugsweise eine zustandsabhängige Firewall (Stateful Inspection Firewall) eingesetzt. Durch eine solche Firewall können - im Gegensatz zu einer einfachen Paketfilter-Firewall - die Zustände der Kommunikation zwischen den Teilnetzen 10, 20 berücksichtigt werden, so dass im Ergebnis weniger potenziell gefährliche Kommunikation erlaubt werden muss. Wenn beispielsweise ein DHCP-Telegramm an der zustandsabhängigen Firewall eingeht, wird durch die Firewall erkannt, ob das Telegramm eine Antwort auf eine Anfrage eines Gerätes aus dem geschützten Netz an einen DHCP Server ist oder nicht. Falls ja, darf das Telegramm passieren, ansonsten wird es geblockt. Bei einer einfachen Paketfilter-Firewall muss man demgegenüber die DHCP-Kommunikation für jeden Fall freigeben, sofern DHCP-Anfragen möglich sein sollen. Dies ist mit einer geringeren Sicherheit verbunden.

Eine der beiden Kopplungseinrichtungen 31, 32 wird im bestimmungsgemäßen Betrieb des Kommunikationsnetzwerks 1 bzgl. der Datenverbindung zwischen dem ersten und dem zweiten Teilnetz aktiv betrieben. Diese Kopplungseinrichtung wird als aktive Kopplungseinrichtung bezeichnet. Die andere der beiden Kopplungseinrichtungen 31, 32 überwacht demgegenüber lediglich die Aktivitäten der aktiven Kopplungseinrichtung. Diese als passive Kopplungseinrichtung bezeichnete Kopplungseinrichtung wird - hinsichtlich einer Datenverbindung zwischen den Teilnetzen 10, 20 - im Stand-by betrieben. Zur Überwachung der Aktivitäten der aktiven Kopplungseinrichtung in Bezug auf die Datenverbindung zwischen den Teilnetzen 10, 20 kann, wie in Fig. 1 dargestellt, eine direkte Kommunikationsverbindung 33 zwischen den beiden Kopplungseinrichtungen 31, 32 vorgesehen sein. Die Datenverbindung zwischen dem ersten und dem zweiten Teilnetz 10, 20 wird innerhalb der gerade aktiven Kopplungseinrichtung bereitgestellt und ist daher in der Figur nicht explizit ersichtlich.

Die Überwachung der Aktivität der aktiven Kopplungseinrichtung kann anstelle über die direkte Datenverbindung 33 auch über die Kommunikationsstrukturen eines der beiden Teilnetze 10, 20 erfolgen. Beispielsweise kann eine solche Kommunikationsstruktur von der Kopplungseinrichtung 31 über das Kopplungselement 16 oder über die Kopplungselemente 11, 12, 13, 14 zu der Kopplungseinrichtung 32 hergestellt werden. Alternativ könnte die Kommunikation auch über die Komponenten des zweiten Teilnetzes erfolgen. In diesem Fall würde die Kommunikation bspw. über das Kopplungselement 26 oder über die Kopplungselemente 21, 22, 23, 24 erfolgen.

Im Rahmen der Überwachung der Aktivitäten der aktiven Kopplungseinrichtung werden insbesondere der Status der zwischen dem ersten und dem zweiten Teilnetz 10, 20 existierenden Datenverbindung sowie, optional, die Zustände (States) der zustandsabhängigen Firewall überwacht. Die Überwachung des Status sowie der Firewallzustände erfolgen vorzugsweise kontinuierlich, wobei der aktuelle Status der Datenverbindung sowie die Firewallzustände durch die passive Kopplungseinrichtung in einem Speicher vorgehalten werden. Wird ein Ausfall der Datenverbindung in der aktiven Kopplungseinrichtung durch die passive Kopplungseinrichtung festgestellt, so übernimmt die passive Kopplungseinrichtung die Aufgabe, die Datenverbindung zwischen den beiden Teilnetzen 10, 20 herzustellen. Die Fortführung der Datenverbindung erfolgt dabei mit dem zuletzt gespeicherten Status sowie den Firewallzuständen. Diese Vorgehensweise ermöglicht die redundante Kopplung der beiden für sich jeweils redundanten Teilnetze 10, 20.

Durch die Verwendung der beschriebenen Kopplungseinrichtungen ist es möglich, MRP-Ringstrukturen redundant und sicher miteinander zu koppeln. Hierdurch können die bekannten Redundanzverfahren auch in hoch verfügbaren Industrieanlagen oder Automatisierungssystemen mit mehreren Teilnetzen eingesetzt werden.

In einer alternativen, nicht dargestellten Abwandlung der Erfindung können die beiden Teilnetze 10, 20 auch über eine einzige Kopplungseinrichtung miteinander verbunden sein. Dies kann in solchen Fällen sinnvoll sein, in denen eine einfache Kopplung zwischen den Teilnetzen als ausreichend angesehen wird, z.B. wenn zwischen den Ringen keine kritischen Daten übertragen werden und der Single-Point-of Failure akzeptabel ist.

## Patentansprüche

1. Kommunikationsnetzwerk, umfassend
- ein erstes Teilnetz (10), in dem eine erste Anzahl an Kopplungselementen (11, 12, 13, 14, 15, 16, 17) über jeweilige Koppelanschlüsse (P) physikalisch miteinander verbunden ist, wobei die erste Anzahl an Kopplungselementen (11, ..., 17) dazu ausgebildet ist, an einem Redundanzverfahren zur Übertragung von Daten teilzunehmen,
- ein zweites Teilnetz (20), in dem eine zweite Anzahl an Kopplungselementen (21, 22, 23, 24, 25, 26, 27) über jeweilige Koppelanschlüsse (P) physikalisch miteinander verbunden ist, wobei die zweite Anzahl an Kopplungselementen (21, ..., 27) dazu ausgebildet ist, an einem Redundanzverfahren zur Übertragung von Daten teilzunehmen,
- eine oder mehrere Kopplungseinrichtungen (31, 32) zur Kopplung des ersten und des zweiten Teilnetzes (10, 20), wobei die Kopplungseinrichtungen (31, 32) sowohl Kopplungselemente des ersten Teilnetzes (10) als auch Kopplungselemente des zweiten Teilnetzes (20) sind.

2. Kommunikationsnetzwerk nach Anspruch 1, bei dem jede der Kopplungseinrichtungen (31, 32) zumindest vier Koppelanschlüsse (101, 102, 201, 202; 103, 104, 203, 204) aufweist, wobei eine jeweilige Kopplungseinrichtung (31, 32) mit zwei ersten Koppelanschlüssen (101, 102) an das erste Teilnetz (10) und mit zwei zweiten Koppelanschlüssen (201, 202) an das zweite Teilnetz (10) angeschlossen ist.

3. Kommunikationsnetzwerk nach Anspruch 1 oder 2, bei dem die Kopplungseinrichtungen (31, 32) dazu ausgebildet sind, an einem Redundanzverfahren zur Übertragung von Daten innerhalb des ersten oder des zweiten Teilnetzes (10, 20) teilzunehmen.

4. Kommunikationsnetzwerk nach einem der vorhergehenden Ansprüche, bei dem die Kopplungseinrichtungen (31, 32) dazu ausgebildet sind, an einem Redundanzverfahren zur Übertragung von Daten zwischen dem ersten oder dem zweiten Teilnetz (10, 20) teilzunehmen.

5. Kommunikationsnetzwerk nach einem der vorhergehenden Ansprüche, bei dem die Kopplungseinrichtungen (31, 32) dazu ausgebildet sind, zwischen dem ersten und dem zweiten Teilnetz (10, 20) auszutauschende Daten zu übertragen, insbesondere die auszutauschenden Daten auf einer Kommunikationsschicht 3 oder höher, einer IP-Ebene und/oder einer Vermittlungsschicht des Kommunikationsnetzwerks zu übertragen.

6. Kommunikationsnetzwerk nach einem der vorhergehenden Ansprüche, bei dem die Kopplungseinrichtungen (31, 32) Mittel zur Kontrolle einer Datenverbindung zwischen dem ersten und dem zweiten Teilnetz (10, 20) umfassen.

7. Kommunikationsnetzwerk nach Anspruch 6, bei dem die Mittel zur Kontrolle der Datenverbindung eine zustandsabhängige Firewall umfassen.

8. Kommunikationsnetzwerk nach einem der vorhergehenden Ansprüche, bei dem in einem bestimmungsgemäßen Betrieb des Kommunikationsnetzwerks bezüglich der Datenverbindung zwischen dem ersten und dem zweiten Teilnetz (10, 20) eine der Kopplungseinrichtungen (31, 32) aktiv betrieben wird, während die andere der Kopplungseinrichtungen (31, 32) die Aktivitäten der einen Kopplungseinrichtung (31, 32) überwacht und bezüglich der Datenverbindung passiv im Stand-by betrieben wird.

9. Kommunikationsnetzwerk nach Anspruch 8, bei dem die passive Kopplungseinrichtung (31, 32) dazu ausgebildet ist, den Status der Datenverbindung und/oder die Zustände des Mittels zur Kontrolle der Datenverbindung zu überwachen.

10. Kommunikationsnetzwerk nach Anspruch 8 oder 9, bei dem die passive Kopplungseinrichtung (31, 32) dazu ausgebildet ist, den Ausfall der Datenverbindung zwischen dem ersten und dem zweiten Teilnetz (10, 20) zu detektieren, eine neue Datenverbindung zwischen dem ersten und dem zweiten Teilnetz (10, 20) unter Verarbeitung des letzten Status der ausgefallenen Datenverbindung und/oder der Zustände des Mittels zur Kontrolle der Datenverbindung einzurichten.

11. Kommunikationsnetzwerk nach einem der Ansprüche 8 bis 10, bei dem zwischen den Kopplungseinrichtungen (31, 32) eine direkte Datenverbindung zur Aktivitätsüberwachung der aktiven Kopplungseinrichtung (31, 32) durch die passive Kopplungseinrichtung (31, 32) vorgesehen ist.

12. Kopplungseinrichtung (31, 32) zur redundanten Kopplung eines ersten und eines zweiten Teilnetzes (10, 20) eines Kommunikationsnetzwerks (1), welches im Betrieb des Kommunikationsnetzwerks sowohl ein Kopplungselement des ersten Teilnetzes (10) als auch ein Kopplungselement des zweiten Teilnetzes (20) ausbildet und dazu ausgebildet ist, an einem jeweiligen Redundanzverfahren der Teilnetze (10, 20) zur Übertragung von Daten innerhalb eines der Teilnetze (10, 20) oder zwischen den Teilnetzen (10, 20) teilzunehmen.
